# EUROPEAN PATENT SPECIFICATION

(11) **EP 3 404 330 B1**
(45) Date of publication and mention of the grant of the patent: **01.07.2020**
(21) Application number: 18171627.5
(22) Date of filing: 09.05.2018
(51) Int. Cl.: F23R 3/00

(54) **REDUNDANT ENDRAIL FOR COMBUSTOR PANEL**
REDUNDANTE ENDSCHIENE FÜR EINE BRENNKAMMERPLATTE
RAIL D'EXTRÉMITÉ REDONDANT POUR PANNEAU DE CHAMBRE DE COMBUSTION

(30) Priority: 18.05.2017 US 201715599196
(43) Date of publication of application: 21.11.2018
(73) Proprietor: United Technologies Corporation, Farmington, CT 06032 (US)
(72) Inventor: QUACH, SAN, Southington, CT Connecticut 06489 (US); MORTON, Jeffrey T., Manchester, CT Connecticut 06040 (US)
(74) Representative: Dehns

(56) References cited:
- WO-A1-2015/085069
- WO-A2-2015/112216
- WO-A2-2015/122950

## Description

### FIELD

The present disclosure relates to gas turbine engines, and more specifically, to combustors of gas turbine engines.

### BACKGROUND

A gas turbine engine typically includes a fan section, a compressor section, a combustor section, and a turbine section. A fan section may drive air along a bypass flowpath while a compressor section may drive air along a core flowpath. In general, during operation, air is pressurized in the compressor section and is mixed with fuel and burned in the combustor section to generate hot combustion gases. The hot combustion gases flow through the turbine section, which extracts energy from the hot combustion gases to power the compressor section and other gas turbine engine loads. The compressor section typically includes low pressure and high pressure compressors, and the turbine section includes low pressure and high pressure turbines.

Combustors used in gas turbine engines rely on combustor panels as thermal shields and to guide combustion gases into the turbine. These combustor panels interface with hot combustion gases and are often susceptible to structural damage and/or oxidation caused by the high temperature of the combustion gases.

WO2015/112216 discloses a gas turbine engine assembly including a combustor wall, which includes a shell and a heat shield. The heat shield includes a base and a plurality of panel rails. WO2015/112216 discloses a combustor panel according to the preamble of claim 1.

WO2015/085069 discloses a turbine engine assembly including a combustor wall. The combustor wall includes a shell, a heat shield and an annular body.

WO2015/122950 discloses a structure for a turbine engine including a shell with a first surface and a heat shield with a textured second surface and a textured third surface. The first surface and the second surface define a first cooling cavity and the first surface and the second surface define a second cooling cavity.

### SUMMARY

According to a first aspect, the present invention provides a combustor panel as claimed in claim 1.

In various embodiments, the first endrail has a first height, measured from the body to a first tip of the first endrail, and the second endrail has a second height, measured from the body to a second tip of the second endrail, wherein the first height is substantially the same as the second height. In various embodiments, the first endrail is solid and has a continuous surface. In various embodiments, a distance between the first endrail and the second endrail is between about 0.127cm and about 2.54cm (about 0.05 inches and about 1.0 inch). In various embodiments, a distance between the first endrail and the second endrail is between about 0.254cm and about 1.27cm (about 0.10 inches and about 0.50 inches).

Also disclosed herein, according to various embodiments, is a combustor of a gas turbine engine as claimed in claim 6.

In various embodiments, an annular cooling cavity is defined between the combustor shell and the combustor panel, wherein a first gap between a first tip of the first endrail and the combustor shell is substantially the same as a second gap between a second tip of the second endrail and the combustor shell. In various embodiments, an impingement hole of the combustor shell is configured to deliver cooling air to a gap between the first endrail and the second endrail. In various embodiments, the combustor panel is a first combustor panel and the combustor further includes a second combustor panel coupled to the combustor shell adjacent the first combustor panel.

Also disclosed herein, according to various embodiments, is a method of manufacturing a combustor panel as claimed in claim 10.

These features and elements as well as the operation of the disclosed embodiments will become more apparent in light of the following description and accompanying drawings.

### BRIEF DESCRIPTION OF THE DRAWINGS

FIG. 1 illustrates a cross-sectional view of an exemplary gas turbine engine, in accordance with various embodiments;
FIG. 2 illustrates a cross-sectional view of a combustor of a gas turbine engine, in accordance with various embodiments;
FIG. 3 illustrates a perspective cross-sectional view of a combustor shell and a combustor panel, in accordance with various embodiments;
FIGS. 4A and 4B illustrate cross-sectional views of a combustor shell and adjacent combustor panels, in accordance with various embodiments; and
FIG. 5 is a schematic flowchart diagram of a method of assembling a gas turbine engine, in accordance with various embodiments.

The subject matter of the present disclosure is particularly pointed out and distinctly claimed in the concluding portion of the specification. A more complete understanding of the present invention, however, may best be obtained by referring to the detailed description and claims when considered in connection with the drawing figures, wherein like numerals denote like elements.

### DETAILED DESCRIPTION

As used herein, "aft" refers to the direction associated with the exhaust (e.g., the back end) of a gas turbine engine. As used herein, "forward" refers to the direction associated with the intake (e.g., the front end) of a gas turbine engine.

A first component that is "radially outward" of a second component means that the first component is positioned at a greater distance away from the engine central longitudinal axis than the second component. A first component that is "radially inward" of a second component means that the first component is positioned closer to the engine central longitudinal axis than the second component. In the case of components that rotate circumferentially about the engine central longitudinal axis, a first component that is radially inward of a second component rotates through a circumferentially shorter path than the second component. The terminology "radially outward" and "radially inward" may also be used relative to references other than the engine central longitudinal axis. For example, a first component of a combustor that is radially inward or radially outward of a second component of a combustor is positioned relative to the central longitudinal axis of the combustor.

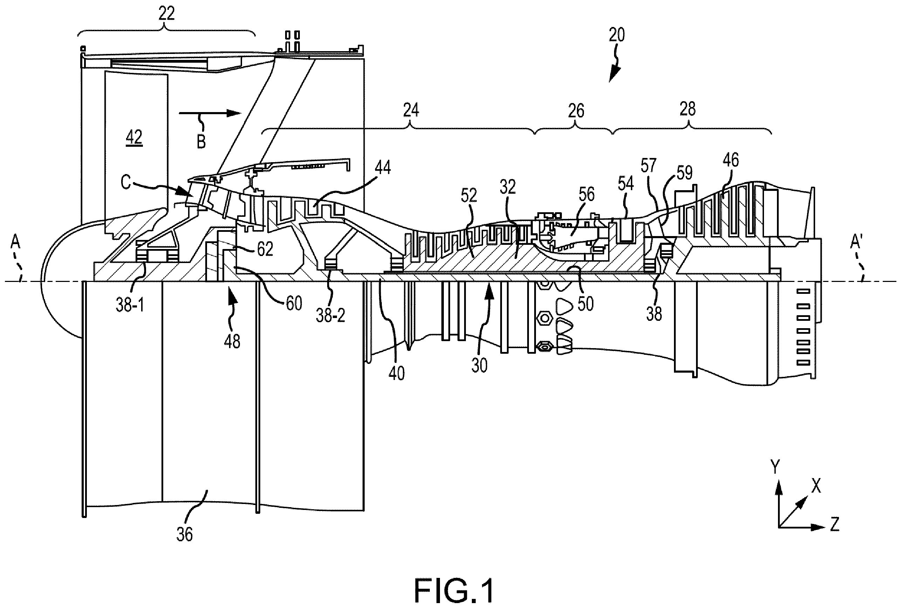

In various embodiments and with reference to FIG. 1, a gas turbine engine 20 is provided. Gas turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive coolant (e.g., air) along a bypass flow-path B while compressor section 24 can drive coolant along a core flow-path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 30 and a high speed spool 32 mounted for rotation about an engine central longitudinal axis A-A' relative to an engine static structure 36 or engine case via several bearing systems 38, 38-1, and 38-2. Engine central longitudinal axis A-A' is oriented in the z direction on the provided xyz axis. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54.

A combustor 56 may be located between high pressure compressor 52 and high pressure turbine 54. The combustor section 26 may have an annular wall assembly having inner and outer shells that support respective inner and outer heat shielding liners. The heat shield liners may include a plurality of combustor panels that collectively define the annular combustion chamber of the combustor 56. An annular cooling cavity is defined between the respective shells and combustor panels for supplying cooling air. Impingement holes are located in the shell to supply the cooling air from an outer air plenum and into the annular cooling cavity.

A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about five (5). In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about five (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present invention contemplates other gas turbine engines including direct drive turbofans. A gas turbine engine may comprise an industrial gas turbine (IGT) or a geared aircraft engine, such as a geared turbofan, or non-geared aircraft engine, such as a turbofan, or may comprise any gas turbine engine as desired.

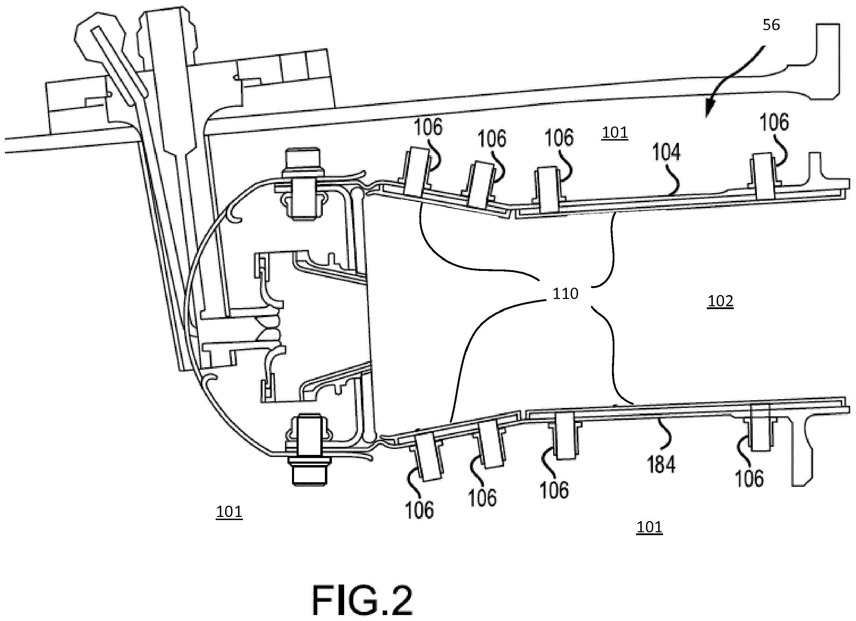

With reference to FIG. 2, an in accordance with various embodiments, one or more combustor panels 110 (e.g., thermal shields, combustor liners) may be positioned in combustor 56 to protect various features of the combustor 56 from the high temperature flames and/or combustion gases. The combustor 56, in various embodiments, may have a combustor chamber 102 defined by a combustor outer shell 104 and a combustor inner shell 184. A diffuser chamber 101 is external the combustor 56 and cooling air may be configured to flow through the diffuser chamber 101 around the combustor 56. The combustor chamber 102 may form a region of mixing of core airflow C (with brief reference to FIG. 1) and fuel, and may direct the high-speed exhaust gases produced by the ignition of this mixture inside the combustor 56. The combustor outer shell 104 and the combustor inner shell 184 may provide structural support to the combustor 56 and its components. For example, a combustor outer shell 104 and a combustor inner shell 184 may comprise a substantially cylindrical or a substantially conical canister portion defining an inner area comprising the combustor chamber 102.

As mentioned above, it may be desirable to protect the combustor outer shell 104 and the combustor inner shell 184 from the harmful effects of high temperatures. Accordingly, one or more combustor panels 110 may be disposed inside the combustor chamber 102 and may provide such protection. The combustor panels 110 may comprise a partial cylindrical or conical surface section. An outer combustor thermal panel may be arranged radially inward of the combustor outer shell 104, for example, circumferentially about the inner surface of the combustor outer shell 104 and one or more inner combustor panels may also be arranged radially outward of the combustor inner shell 184. The combustor panels 110 may comprise a variety of materials, such as metal, metal alloys, and/or ceramic matrix composites, among others

With continued reference to FIG. 2 and as mentioned above, the combustor panels 110 may be mounted and/or coupled to the combustor shell 104/184 via one or more attachment features 106. The combustor panels 110 may be made of any suitable heat tolerant material. In this manner, the combustor panels 110 may be substantially resistant to thermal mechanical fatigue in order to inhibit cracking of the combustor panels 110 and/or to inhibit liberation of portions of the combustor panels 110. In various embodiments, the combustor panels 110 may be made from a nickel based alloy and/or a cobalt based alloy, among others. For example, the combustor panels 110 may be made from a high performance nickel-based super alloy. In various embodiments, the combustor panels 110 may be made from a cobalt-nickel-chromium-tungsten alloy.

The one or more attachment features 106 facilitate coupling and/or mounting the combustor panels 110 to the respective shells 104, 184 of the combustor 56. In various embodiments, the attachment features 106 may be a boss or a stud extending radially relative to the combustor panels 110. In various embodiments, the attachment feature 106 is a cylindrical boss, such as a threaded pin, or may be a rectangular boss, such as for receiving a clip, or may be any other apparatus whereby the combustor panel 110 is mounted to the combustor outer shell 104 or the combustor inner shell 184. In various embodiments, the attachment feature 106 comprises a threaded stud that extends through a corresponding aperture in the combustor outer shell 104 or the combustor inner shell 184, and is retained in position by an attachment nut disposed outward of the combustor outer shell 104 and torqued so that the attachment feature 106 is preloaded with a retaining force and securely affixes the combustor panel 110 in a substantially fixed position relative to the combustor outer shell 104 or the combustor inner shell 184.

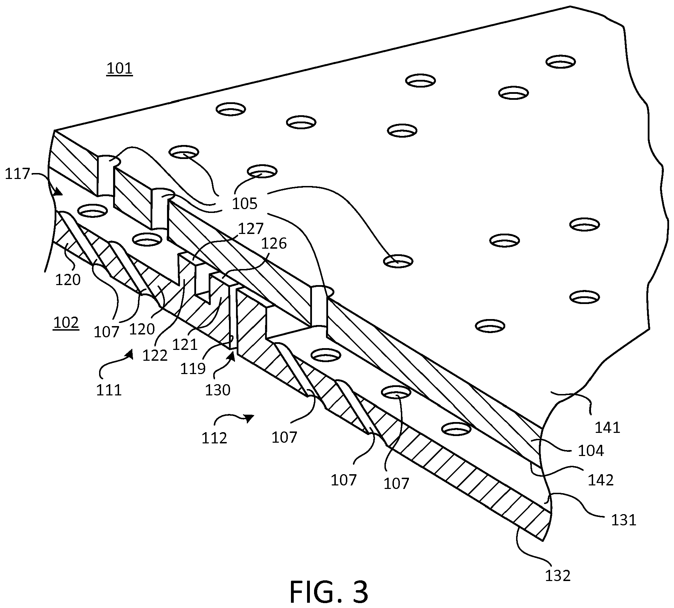

In various embodiments, and with reference to FIG. 3, an annular cooling cavity 117 is formed and/or defined between the combustor shell 104 and two adjacent combustor panels 110 (e.g., a first combustor panel 111 and a second combustor panel 112). As mentioned above, cooling air in the diffuser chamber 101 may enter the annular cooling cavity 117 via impingement holes 105 formed in the combustor shell 104. That is, impingement holes 105 may extend from a diffuser side 141 of the combustor shell 104 to a combustor side 142 of the combustor shell 104 and may supply cooling air to the annular cooling cavity 117. The cooling air in the annular cooling cavity 117 may enter the combustor chamber 102 via effusion holes 107 formed in the combustor panel. That is, effusion holes 107 may extend from a cooling surface or "cold side" 131 of the combustor panel to a combustion facing surface or "hot side" 132 of the combustor panel that is opposite the cold side 131. In various embodiments, the effusion holes 107 are generally oriented to create a protective "blanket" of air film over the hot side 132 of the combustor panel thereby protecting the combustor panel from the hot combustion gases in the combustor chamber 102.

In various embodiments, and with continued reference to FIG. 3, a channel 130 may be defined between adjacent combustor panels 111, 112. For example, the first combustor panel 111 may be a forward combustor panel and the second combustor panel 112 may be an aft combustor panel, wherein the channel 130 is an axial gap (e.g., the combustor panels 111, 112 are axially spaced apart from each other). In another example, the first combustor panel 111 and the second combustor panel 112 may be circumferentially adjacent each other, and the channel 130 may be a circumferential gap (e.g., the combustor panels 111, 112 may be circumferentially spaced apart from each other). The channel 130 may fluidly connect the annular cooling cavity 117 to the combustor chamber 102. Said differently, the cooling air may be configured to flow from the annular cooling cavity 117, through the channel 130, and into the combustor chamber 102.

As mentioned above, the high operating temperatures and pressure ratios of the combustion gases in the combustor section 26 may create operating environments that can damage various components of the combustor, such as the combustor panels, and thereby shorten the operational life of the combustor. The details of the present invention relate to a configuration of a combustor panel that, according to various embodiments, tends to prevent runaway oxidation (e.g., tends to prevent excessive "burnthrough") of the combustor panel. The details of the present invention may be implemented in new gas turbine engines/combustors and/or may be implemented to repair, retrofit, and/or otherwise modify existing gas turbine engines/combustors.

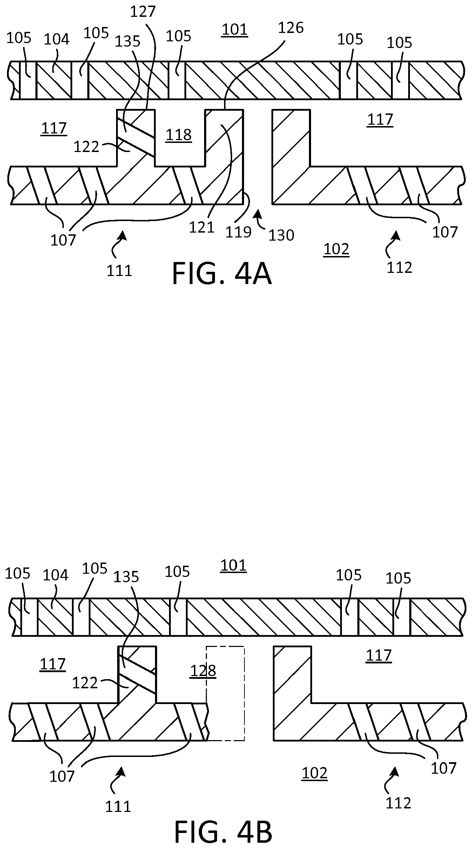

In various embodiments, and with continued reference to FIG. 3, the first combustor panel 111 has a body 120, a first endrail 121, and a second endrail 122. The first endrail 121 is disposed along an edge 119 of the body 120 and the second endrail 122 is disposed adjacent the first endrail 121, according to various embodiments. A gap/volume (118 with reference to FIG. 4A) is defined between the first endrail 121 and the second endrail 122. Thus, the first combustor panel 111 has redundant endrails 121, 122 protruding from the body 120 adjacent edge 119, according to various embodiments. Generally, the second endrail 122 tends to prevent rapid oxidation of the body 120 of the first combustor panel 111 in response to damage/oxidation of the first endrail 121, as described in greater detail.

The second endrail 122, according to various embodiments, extends substantially parallel to the first endrail 121 along the cold side 131 of the first combustor panel 111. In various embodiments, the second endrail 122 has the substantially same height as the first endrail 121. Said differently, the first endrail 121 has a first height, as measured as distance from the body 120 to a first tip 126 of the first endrail 121, the second endrail 122 has a second height, as measured as distance from the body 120 to a second tip 127 of the second endrail 122, and the first height is substantially the same as the second height, according to various embodiments. As used in this context only, the phrase "substantially the same height" means that the heights are within 10% of each other. Accordingly, the second endrail 122 is not just a minor rib that protrudes along the cold side 131 of the first combustor panel 111, but the second endrail 122 is similarly sized relative to the first endrail 121 and is configured to provide a redundant level of cooling air flow control, according to various embodiments. Conventional combustor panels that do not have a second, redundant endrail may experience rapid and exacerbated panel damage if the endrail is damaged (e.g., burnt away). That is, if a conventional combustor panel were to lose its only endrail, the cooling air flow in the annular cooling cavity would preferentially flow through the large area where the endrail was located instead of through the effusion holes, which would decrease effusion cooling to the panel and would result in rapid panel oxidation. However, according to various embodiments, the first combustor panel 111 disclosed herein, having redundant endrails 121, 122, maintains sufficient effusion cooling even in the event of damage/oxidation to the first endrail 121, as described in greater detail below with reference to FIG. 4B.

In various embodiments, the first endrail 121 is solid and has a continuous surface such that no cooling holes extend therethrough. With reference to FIGS. 4A and 4B, the second endrail 122 defines an endrail hole 135 extending through the second endrail 122. The endrail hole 135 is configured to deliver cooing air flow to the gap 118 between the first endrail 121 and second endrail 122. The endrail hole 135 may have various cross-sectional shapes (e.g. circular, elliptical, obround, polygonal, etc.). The endrail hole 135 extends in a canted direction, relative to the first combustor panel 111, to provide impingement cooling and/or effusion cooling.

In various embodiments, a distance between the first endrail 121 and the second endrail 122 (e.g., a width of gap 118) is between about 0.13 centimeters (0.05 inches) and about 2.54 centimeters (1.00 inch). In various embodiments, the distance between the first endrail 121 and the second endrail 122 is between about 0.13 centimeters (0.05 inches) and about 1.27 centimeters (0.50 inches). In various embodiments, the distance between the first endrail 121 and the second endrail 122 is between about 0.25 centimeters (0.10 inches) and about 1.27 centimeters (0.50 inches). In various embodiments, the distance between the first endrail 121 and the second endrail 122 is between about 0.25 centimeters (0.10 inches) and about 1.02 centimeters (0.40 inches). As used in this context only, the term "about" means plus or minus 5% of the provided value.

In various embodiments, one or more impingement holes 105 in the combustor shell 104 may be aligned with and configured to deliver cooling air to the gap 118 between the first endrail 121 and the second endrail 122. In various embodiments, and with reference to FIGS. 3 and 4A, a distance between the first tip 126 of the first endrail 121 and the combustor side 142 of the combustor shell 104 is the same as a distance between the second tip 127 of the second endrail 122 and the combustor side 142 of the combustor shell 104. Said differently, a first gap between the first tip 126 of the first endrail 121 and the combustor shell 104 is substantially the same as a second gap between the second tip 127 of the second endrail 122 and the combustor shell 104.

Under nominal operating conditions, the pressure of cooling air within the gap 118 between the first and second endrails 121, 122 may be substantially the same as the pressure of cooling air within the annular cooling cavity 117. In response to damage/oxidation of the first endrail 121 (indicated by dashed lines in FIG. 4B), the pressure of the cooling air in the burnt away gap 128 would drop to be substantially the same as the pressure within the combustor chamber 102. As mentioned above, the presence of the second endrail 122 prevents the pressure in the annular cooling cavity 117 from rapidly falling, thereby maintaining a sufficient pressure gradient between the annular cooling cavity 117 and the combustor chamber 102 to enable proper effusion cooling of the first combustor panel 111 (e.g., via effusion holes 107).

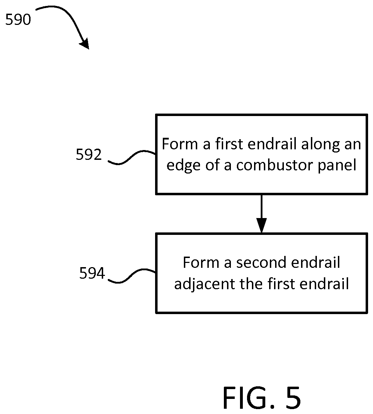

In various embodiments, and with reference to FIG. 5, a method 590 of manufacturing a combustor panel is provided. The method 590 may include forming a first endrail along an edge of a body of a combustor panel at step 592 and forming a second endrail adjacent the first endrail at step 594. Formation of the endrails at steps 592 and 594 may be by casting, additive manufacturing, or other procedures. Step 592 may include forming the first endrail so that it has a first height, as measured as a distance from the body of the combustor panel to a first tip of the first endrail and step 594 may include forming the second endrail so that it has a second height, as measured as a distance from the body of the combustor panel to a second tip of the second endrail, wherein the first height and the second height are the same. According to various embodiments, the method 590 may include coupling the combustor panel to a combustor shell such that respective distances between the respective tips of the endrails and the combustor shell is the same. The method 590 further includes forming an endrail hole extending through the second endrail.

## Claims

1. A combustor panel (111) comprising:
a body (120) comprising an edge (119);
a first endrail (121) disposed along the edge (119) of the body (120); and
a second endrail (122) disposed adjacent the first endrail (121), wherein a gap (118) is defined between the first endrail (121) and the second endrail (122),
wherein the second endrail (122) defines an endrail hole (135) extending through the second endrail (122) and configured to deliver cooling air flow to the gap (118) between the first endrail (121) and the second endrail (122), **characterised in that** the endrail hole (135) is canted relative to the combustor panel (111).

2. The combustor panel (111) of claim 1, wherein the first endrail (121) has a first height, measured from the body (120) to a first tip (126) of the first endrail (121), and the second endrail (122) has a second height, measured from the body (120) to a second tip (127) of the second endrail (122), wherein the first height is substantially the same as the second height.

3. The combustor panel (111) of any preceding claim, wherein the first endrail (121) is solid and has a continuous surface.

4. The combustor panel (111) of any preceding claim, wherein a distance between the first endrail (121) and the second endrail (122) is between about 0.127cm and about 2.54cm (about 0.05 inches and about 1.0 inch).

5. The combustor panel (111) of any of claims 1 to 3, wherein a distance between the first endrail (121) and the second endrail (122) is between about 0.254cm and about 1.27cm (about 0.10 inches and about 0.50 inches).

6. A combustor (56) of a gas turbine engine (20), the combustor (56) comprising:
a combustor shell (104); and
a combustor panel (111) as claimed in any preceding claim, the combustor panel (111) being coupled to the combustor shell (104).

7. The combustor (56) of claim 6, wherein an annular cooling cavity (117) is defined between the combustor shell (104) and the combustor panel (111), wherein a first gap between a first tip (126) of the first endrail (121) and the combustor shell (104) is substantially the same as a second gap between a second tip (127) of the second endrail (122) and the combustor shell (104).

8. The combustor (56) of claim 6 or 7, wherein an impingement hole (105) of the combustor shell (104) is configured to deliver cooling air to the gap (118) between the first endrail (121) and the second endrail (122).

9. The combustor (56) of claim 6, 7 or 8, wherein the combustor panel (111) is a first combustor panel (111), wherein the combustor (56) further comprises a second combustor panel (112) coupled to the combustor shell (104) adjacent the first combustor panel (111).

10. A method of manufacturing a combustor panel (111), the method comprising:
forming a first endrail (121) along an edge of a body (120) of the combustor panel (111);
forming a second endrail (122) adjacent the first endrail (121); and
forming an endrail hole (135) extending through the second endrail (122),
wherein the endrail hole (135) is configured to deliver cooing air flow to the gap (118) between the first endrail (121) and second endrail (122),
**characterised in that** the endrail hole (135) is canted relative to the combustor panel (111).

11. The method of claim 10, wherein the first endrail (121) has a first height, measured from the body to a first tip (126) of the first endrail (121), and the second endrail (122) has a second height, measured from the body to a second tip (127) of the second endrail, wherein the first height is substantially the same as the second height.

## Patentansprüche

1. Brennkammerplatte (111), umfassend:
einen Körper (120), der eine Kante (119) umfasst;
eine erste Endschiene (121), die entlang der Kante (119) des Körpers (120) angeordnet ist; und
eine zweite Endschiene (122), die benachbart zu der ersten Endschiene (121) angeordnet ist, wobei ein Spalt (118) zwischen der ersten Endschiene (121) und der zweiten Endschiene (122) definiert ist,
wobei die zweite Endschiene (122) ein Endschienenloch (135) definiert, das sich durch die zweite Endschiene (122) erstreckt und dazu konfiguriert ist, einen Kühlluftstrom zu dem Spalt (118) zwischen der ersten Endschiene (121) und der zweiten Endschiene (122) zuzuführen, **dadurch gekennzeichnet, dass** das Endschienenloch (135) relativ zu der Brennkammerplatte (111) geneigt ist.

2. Brennkammerplatte (111) nach Anspruch 1, wobei die erste Endschiene (121) eine erste Höhe, gemessen von dem Körper (120) zu einer ersten Spitze (126) der ersten Endschiene (121), aufweist und die zweite Endschiene (122) eine zweite Höhe, gemessen von dem Körper (120) zu einer zweiten Spitze (127) der zweiten Endschiene (122), aufweist, wobei die erste Höhe im Wesentlichen gleich der zweiten Höhe ist.

3. Brennkammerplatte (111) nach einem der vorstehenden Ansprüche, wobei die erste Endschiene (121) massiv ist und eine durchgehende Fläche aufweist.

4. Brennkammerplatte (111) nach einem der vorstehenden Ansprüche, wobei ein Abstand zwischen der ersten Endschiene (121) und der zweiten Endschiene (122) zwischen ungefähr 0,127 cm und ungefähr 2,54 cm (ungefähr 0,05 Zoll und ungefähr 1,0 Zoll) liegt.

5. Brennkammerplatte (111) nach einem der Ansprüche 1 bis 3, wobei ein Abstand zwischen der ersten Endschiene (121) und der zweiten Endschiene (122) zwischen ungefähr 0,254 cm und ungefähr 1,27 cm (ungefähr 0,10 Zoll und ungefähr 0,50 Zoll) liegt.

6. Brennkammer (56) eines Gasturbinenmotors (20), wobei die Brennkammer (56) Folgendes umfasst:
eine Brennkammerummantelung (104); und
eine Brennkammerplatte (111) nach einem der vorstehenden Ansprüche, wobei die Brennkammerplatte (111) an die Brennkammerummantelung (104) gekoppelt ist.

7. Brennkammer (56) nach Anspruch 6, wobei ein ringförmiger Kühlhohlraum (117) zwischen der Brennkammerummantelung (104) und der Brennkammerplatte (111) definiert ist, wobei ein erster Spalt zwischen einer ersten Spitze (126) der ersten Endschiene (121) und der Brennkammerummantelung (104) im Wesentlichen gleich einem zweiten Spalt zwischen einer zweiten Spitze (127) der zweiten Endschiene (122) und der Brennkammerummantelung (104) ist.

8. Brennkammer (56) nach Anspruch 6 oder 7, wobei ein Beaufschlagungsloch (105) der Brennkammerummantelung (104) dazu konfiguriert ist, Kühlluft zu dem Spalt (118) zwischen der ersten Endschiene (121) und der zweiten Endschiene (122) zuzuführen.

9. Brennkammer (56) nach Anspruch 6, 7 oder 8, wobei die Brennkammerplatte (111) eine erste Brennkammerplatte (111) ist, wobei die Brennkammer (56) ferner eine zweite Brennkammerplatte (112) umfasst, die benachbart zu der ersten Brennkammerplatte (111) an die Brennkammerummantelung (104) gekoppelt ist.

10. Verfahren zum Herstellen einer Brennkammerplatte (111), wobei das Verfahren Folgendes umfasst:
Ausbilden einer ersten Endschiene (121) entlang einer Kante eines Körpers (120) der Brennkammerplatte (111);
Ausbilden einer zweiten Endschiene (122) benachbart zu der ersten Endschiene (121); und
Ausbilden eines Endschienenlochs (135), das sich durch die zweite Endschiene (122) erstreckt,
wobei das Endschienenloch (135) dazu konfiguriert ist, einen Kühlluftstrom zu dem Spalt (118) zwischen der ersten Endschiene (121) und der zweiten Endschiene (122) zuzuführen,
**dadurch gekennzeichnet, dass** das Endschienenloch (135) relativ zu der Brennkammerplatte (111) geneigt ist.

11. Verfahren nach Anspruch 10, wobei die erste Endschiene (121) eine erste Höhe, gemessen von dem Körper zu einer ersten Spitze (126) der ersten Endschiene (121), aufweist und die zweite Endschiene (122) eine zweite Höhe, gemessen von dem Körper zu einer zweiten Spitze (127) der zweiten Endschiene, aufweist, wobei die erste Höhe im Wesentlichen gleich der zweiten Höhe ist.

## Revendications

1. Panneau de chambre de combustion (111) comprenant :
un corps (120) comprenant un bord (119) ;
un premier rail d'extrémité (121) disposé le long du bord (119) du corps (120) ; et
un second rail d'extrémité (122) disposé de manière adjacente au premier rail d'extrémité (121), dans lequel un espace (118) est défini entre le premier rail d'extrémité (121) et le second rail d'extrémité (122),
dans lequel le second rail d'extrémité (122) définit un trou de rail d'extrémité (135) s'étendant à travers le second rail d'extrémité (122) et conçu pour fournir un flux d'air de refroidissement à l'espace (118) entre le premier rail d'extrémité (121) et le second rail d'extrémité (122), **caractérisé en ce que** le trou de rail d'extrémité (135) est incliné par rapport au panneau de chambre de combustion (111).

2. Panneau de chambre de combustion (111) selon la revendication 1, dans lequel le premier rail d'extrémité (121) a une première hauteur, mesurée du corps (120) à un premier bout (126) du premier rail d'extrémité (121), et le second rail d'extrémité (122) a une seconde hauteur, mesurée du corps (120) à un second bout (127) du second rail d'extrémité (122), dans lequel la première hauteur est sensiblement la même que la seconde hauteur.

3. Panneau de chambre de combustion (111) selon une quelconque revendication précédente, dans lequel le premier rail d'extrémité (121) est plein et a une surface continue.

4. Panneau de chambre de combustion (111) selon une quelconque revendication précédente, dans lequel une distance entre le premier rail d'extrémité (121) et le second rail d'extrémité (122) est comprise entre environ 0,127 cm et environ 2,54 cm (entre environ 0,05 pouce et environ 1,0 pouce).

5. Panneau de chambre de combustion (111) selon l'une quelconque des revendications 1 à 3, dans lequel une distance entre le premier rail d'extrémité (121) et le second rail d'extrémité (122) est comprise entre environ 0,254 cm et environ 1,27 cm (entre environ 0,10 pouce et environ 0,50 pouce).

6. Chambre de combustion (56) d'un moteur à turbine à gaz (20), la chambre de combustion (56) comprenant :
une enveloppe de chambre de combustion (104) ; et
un panneau de chambre de combustion (111) selon une quelconque revendication précédente, le panneau de chambre de combustion (111) étant couplé à l'enveloppe de chambre de combustion (104).

7. Chambre de combustion (56) selon la revendication 6, dans laquelle une cavité de refroidissement annulaire (117) est définie entre l'enveloppe de chambre de combustion (104) et le panneau de chambre de combustion (111), dans lequel un premier espace entre un premier bout (126) du premier rail d'extrémité (121) et l'enveloppe de chambre de combustion (104) est sensiblement le même qu'un second espace entre un second bout (127) du second rail d'extrémité (122) et l'enveloppe de chambre de combustion (104).

8. Chambre de combustion (56) selon la revendication 6 ou 7, dans laquelle un trou d'impact (105) de l'enveloppe de chambre de combustion (104) est conçu pour fournir de l'air de refroidissement à l'espace (118) entre le premier rail d'extrémité (121) et le second rail d'extrémité (122).

9. Chambre de combustion (56) selon la revendication 6, 7 ou 8, dans laquelle le panneau de chambre de combustion (111) est un premier panneau de chambre de combustion (111), dans laquelle la chambre de combustion (56) comprend en outre un second panneau de chambre de combustion (112) couplé à l'enveloppe de chambre de combustion (104) adjacent au premier panneau de chambre de combustion (111).

10. Procédé de fabrication d'un panneau de chambre de combustion (111), le procédé comprenant :
la formation d'un premier rail d'extrémité (121) le long d'un bord d'un corps (120) du panneau de chambre de combustion (111) ;
la formation d'un second rail d'extrémité (122) adjacent au premier rail d'extrémité (121) ; et
la formation d'un trou de rail d'extrémité (135) s'étendant à travers le second rail d'extrémité (122),
dans lequel le trou de rail d'extrémité (135) est conçu pour fournir un flux d'air de refroidissement à l'espace (118) entre le premier rail d'extrémité (121) et le second rail d'extrémité (122),
**caractérisé en ce que** le trou de rail d'extrémité (135) est incliné par rapport au panneau de chambre de combustion (111).

11. Procédé selon la revendication 10, dans lequel le premier rail d'extrémité (121) a une première hauteur, mesurée du corps à un premier bout (126) du premier rail d'extrémité (121), et le second rail d'extrémité (122) a une seconde hauteur, mesurée du corps à un second bout (127) du second rail d'extrémité, dans lequel la première hauteur est sensiblement la même que la seconde hauteur.
